# EUROPÄISCHE PATENTSCHRIFT

(11) **EP 1 612 877 B1**
(45) Veröffentlichungstag und Bekanntmachung des Hinweises auf die Patenterteilung: **14.05.2008**
(21) Anmeldenummer: 05004627.5
(22) Anmeldetag: 03.03.2005
(51) Int. Cl.: H01M 8/02, H01M 8/10

(54) **Brennstoffzelle**
Fuel cell
Pile à combustible

(30) Priorität: 01.07.2004 DE 102004031762
(43) Veröffentlichungstag der Anmeldung: 04.01.2006
(73) Patentinhaber: Carl Freudenberg KG, 69469 Weinheim (DE)
(72) Erfinder: Gerding, Lars, 69469 Weinheim (DE); Schneider Echkhard, 69488 Birkenau (DE); Wolf, Joachim, 69469 Weinheim (DE)

(56) Entgegenhaltungen:
- EP-A- 1 372 203
- DE-A1- 19 713 250
- US-A1- 2002 031 698

## Beschreibung

Die Erfindung betrifft eine Brennstoffzelle mit einer Membran-Elektroden-Anordnung (MEA), die zwischen zwei Bipolarplatten (BPP) angeordnet ist, wobei die MEA eine Membran umfasst, die zwischen mindestens zwei Gasdiffusionslagen (GDL) angeordnet ist, der Randbereich der MEA mit einem Dichtungsmaterial imprägniert ist und der aus den BPPs und der MEA bestehende Aufbau verpresst ist.

Eine derartige Brennstoffzelle ist aus der EP 1 372 203 A1 bekannt.

In der internationalen Patentanmeldung WO 03/096456 wird eine Membran-Elektroden-Anordnung für eine Brennstoffzelle beschrieben, die eine Polymerelektrolytmembran (PEM) mit einer Anodenkatalysatorschicht auf der einen Seite und einer Kathodenkatalysatorschicht auf der anderen Seite umfasst. Diese PEM ist zwischen einer anodenseitigen Gasdiffusionslage (GDL) und einer kathodenseitigen Gasdiffusionslage angeordnet. Der Randbereich der PEM ragt über die GDLs hinaus und ist beidseitig mit Dichtungen versehen. Außerdem sind die Randbereiche der GDLs mit dem elastomeren Material der Dichtungen imprägniert.

Eine derartige Imprägnierung des Randbereichs der MEA mit dem Material einer integrierten Dichtung erweist sich in mehrerlei Hinsicht als vorteilhaft. Die Imprägnierung des Randbereichs der MEA wird in der Regel zusammen mit der Dichtung hergestellt, die dadurch besonders gut an die MEA angebunden werden kann. Zudem verbindet die Imprägnierung die einzelnen Lagen der MEA miteinander und stabilisiert so deren Aufbau, insbesondere im Bereich des Membranaustritts, wo ansonsten Schwachstellen auftreten. Durch diese Stabilisierung bzw. Versteifung vereinfacht sich auch das Handling der MEA insgesamt bei der anschließenden Assemblierung der Zelle.

Die Verwendung der aus der internationalen Patentanmeldung WO 03/096456 bekannten MEA mit einer Imprägnierung im Randbereich erweist sich aber in der Praxis als problematisch, da das ansonsten elastomere Dichtungsmaterial in Verbindung mit dem Material der GDLs in der Regel einen weitgehend inkompressiblen Verbund bildet.

Voraussetzung für die Funktion einer Brennstoffzelle ist eine flächige Kontaktierung zwischen der PEM und den GDLs sowie zwischen den GDLs und den jeweils angrenzenden BPPs. Deshalb wird der aus BPP/MEA/BPP bestehende Aufbau üblicherweise zusammengedrückt, wobei insbesondere die GDLs der MEA im Bereich der aktiven Fläche der PEM zwischen den beiden BPPs verpresst werden sollen. Wird jedoch eine MEA verwendet, wie sie in der internationalen Patentanmeldung WO 03/096456 beschrieben ist, so wirkt der imprägnierte Randbereich beim Verpressen des BPP/MEA/BPP-Aufbaus als Stopper bzw. als Anschlag, so dass eine Flächenkontaktierung nicht gewährleistet oder gar verbessert werden kann. Ein weiteres Verpressen kann dazu führen, dass Teile der GDLs in die Fließkanäle verdrängt werden, die in der aktiven Fläche, d.h. der Mittelfläche, der BPPs integriert sind.

### Darstellung der Erfindung

Mit der vorliegenden Erfindung werden Maßnahmen vorgeschlagen, durch die sich die Kontaktierung zwischen der PEM und den GDLs sowie zwischen den GDLs und den jeweils angrenzenden BPPs einer Brennstoffzelle, die mit einer MEA mit imprägniertem Randbereich ausgestattet ist, einfach verbessern lässt.

Dies wird erfindungsgemäß dadurch erreicht, dass der Mittelbereich mindestens einer BPP gegen deren Randbereich abgesetzt ist, so dass der Mittelbereich der MEA stärker komprimiert wird als der imprägnierte Randbereich der MEA.

Zunächst ist erkannt worden, dass der Materialverbund, der bei der Imprägnierung der MEA-Materialien mit dem elastischen Dichtungsmaterial entsteht, weitgehend inkompressibel ist oder sich zumindest wesentlich schlechter komprimieren lässt als der nicht imprägnierte Mittelbereich der MEA und auch schlechter als die aus dem Dichtungsmaterial gebildete Dichtung. Davon ausgehend ist erfindungsgemäß erkannt worden, dass besondere Maßnahmen erforderlich sind, um die Flächenkontaktierung zwischen den an die PEM angrenzenden Schichten durch eine einfache Verpressung des BPP/MEA/BPP-Aufbaus zu verbessern, da der inkompressible Randbereich einer solchen Verpressung entgegensteht. Deshalb wird vorgeschlagen, an Stelle der üblicherweise verwendeten planparallelen Bipolarplatten Bipolarplatten zu verwenden, deren Mittelbereich, in dem sich üblicherweise das Flow Field der Brennstoffzelle befindet, gegen den Randbereich abgesetzt ist. Beispielsweise kann der Mittelbereich dazu im Vergleich zum Randbereich dicker ausgebildet sein. Mit Hilfe derartiger Bipolarplatten kann der aktive Bereich der MEA einfach zusammengedrückt werden, obwohl der Randbereich der Bipolarplatten auf dem inkompressiblen Randbereich der MEA aufsitzt.

In einer vorteilhaften Variante der Erfindung ist im Randbereich der Bipolarplatten eine umlaufende Nut oder ein Absatz zur Aufnahme des imprägnierten Randbereichs der MEA ausgebildet. Dies erweist sich sowohl im Hinblick auf eine einfache Fertigung der Bipolarplatten als vorteilhaft als auch im Hinblick auf eine einfache Assemblierung der Brennstoffzelle.

Bei Verwendung von erfindungsgemäßen BPPs, wie sie voranstehend beschrieben sind, kann die Inkompressibilität des imprägnierten Randbereichs der MEA in vorteilhafter Weise ausgenutzt werden, um zu verhindern, dass der aus BPPs und MEA bestehende Aufbau zu stark verpresst wird. Dazu werden die BPPs und insbesondere der Absatz zwischen Mittelbereich und Randbereich so dimensioniert, dass der imprägnierte Randbereich der MEA als Stopper, also als Anschlag beim Verpressen fungiert.

Alternativ oder auch ergänzend zu der voranstehend beschriebenen Konfektionierung der Bipolarplatten kann auch der Randbereich der GDLs, der mit einer Imprägnierung versehen ist bzw. wird, dünner ausgebildet sein als der Mittelbereich. In einer besonders vorteilhaften Variante sind die Ränder der GDLs bzgl. der Membranebene abgeschrägt oder zumindest abgeflacht. Da das Dichtungsmaterial bei der Imprägnierung eines abgeschrägten Randbereichs der MEA nur bis zu einer bestimmten Tiefe in das MEA-Material eindringt, bildet sich in diesem Fall ein imprägnierter Bereich aus, der in Verpressrichtung, also senkrecht zur PEM, komprimierbar ist. Der Randbereich der GDLs kann aber auch mit einem Absatz versehen werden und dadurch dünner als der Mittelbereich ausgebildet werden. Der Mittelbereich ist dann zumindest bis zur Höhe des imprägnierten Randbereichs komprimierbar. Wird der Absatz im Randbereich der GDLs vor dem Imprägnieren und Anformen einer Dichtung erzeugt, so umgreift die Dichtung den imprägnierten Randbereich. Der Absatz kann aber auch nachträglich erzeugt werden, so dass die MEA eine Nut im imprägnierten Randbereich aufweist.

### Kurzbeschreibung der Zeichnungen

Wie bereits voranstehend erörtert, gibt es verschiedene Möglichkeiten, die Lehre der vorliegenden Erfindung in vorteilhafter Weise auszugestalten und weiterzubilden. Dazu wird einerseits auf die den unabhängigen Patentansprüchen nachgeordneten Patentansprüche und andererseits auf die nachfolgende Beschreibung mehrerer Ausführungsbeispiele der Erfindung anhand der Zeichnungen verwiesen.
- Fig. 1: zeigt eine Schnittdarstellung durch den Randabschnitt einer MEA und einer ersten erfindungsgemäßen BPP vor dem Verpressen,
- Fig. 2: zeigt eine Schnittdarstellung durch den Randabschnitt einer zweiten erfindungsgemäßen BPP,
- Fig. 3: zeigt eine Schnittdarstellung durch den Randabschnitt einer erfindungsgemäßen ersten MEA mit abgeflachten GDLs.
- Fig. 4: zeigt eine Schnittdarstellung durch den Randabschnitt einer erfindungsgemäßen zweiten MEA mit abgeschrägten GDLs.
- Fig. 5: zeigt eine Schnittdarstellung durch den Randabschnitt einer erfindungsgemäßen dritten MEA mit einer Nut im imprägnierten Randbereich.

### Ausführung der Erfindung

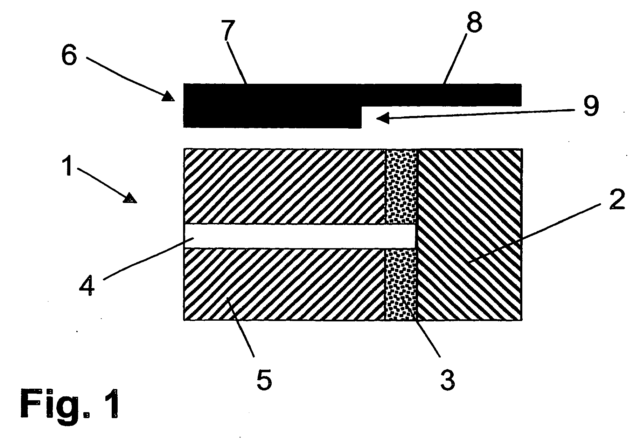

In Fig. 1 ist eine Membran-Elektroden-Anordnung (MEA) 1 mit einer integrierten Dichtung 2 und einem imprägnierten Randbereich 3 schematisch dargestellt. Die MEA 1 umfasst eine Polymerelektrolytmembran (PEM) 4, deren Oberflächen einerseits mit einer Schicht aus Kathodenkatalysatormaterial und andererseits mit einer Schicht aus Anodenkatalysatormaterial versehen sind. Diese Katalysatorschichten sind hier nicht dargestellt. Die PEM 4 ist zwischen zwei Gas-Diffusions-Lagen (GDL) 5 angeordnet, die im hier dargestellten Ausführungsbeispiel bündig mit der PEM 4 abschließen und aus einem porösen Substrat, wie z.B. einem Vliesstoff, einem Gewebe oder Papier, gebildet sind. Die integrierte Dichtung 2 besteht aus einem elastischen Dichtungsmaterial. Bei der Herstellung der Dichtung 2 wurde auch der Randbereich 3 der MEA 1 imprägniert. Dabei hat sich ein im wesentlichen inkompressibler Verbund zwischen dem Dichtungsmaterial und den MEA-Materialien, insbesondere dem porösen Substrat der GDLs 5, gebildet.

Die MEA 1 wird zwischen zwei Bipolarplatten (BPP) 6 angeordnet, von denen hier nur eine dargestellt ist. Dabei kann es sich beispielsweise um Metallbleche handeln. Bipolarplatten können aber auch aus anderen leitfähigen Materialien hergestellt werden, wie z.B. aus Graphit oder Mischungen mit hohem Graphitanteil.

Erfindungsgemäß ist der Mittelbereich 7 der BPP 6 gegen deren Randbereich 8 abgesetzt. Dazu ist im Randbereich 8 ein umlaufender Absatz 9 ausgebildet, so dass der Mittelbereich 7 eine größere Dicke aufweist als der Randbereich 8 der BPP 6. Diese Struktur der BPP 6 führt dazu, dass der Mittelbereich der MEA 1 stärker komprimiert wird als der imprägnierte Randbereich 3 der MEA 1, wenn ein aus zwei BPPs 6 und der MEA 1 bestehender Aufbau verpresst wird. Auf diese Weise kann ein guter Flächenkontakt zwischen der PEM 4 und den GDLs 5 sowie zwischen den GDLs 5 und den BPPs 6 hergestellt werden.

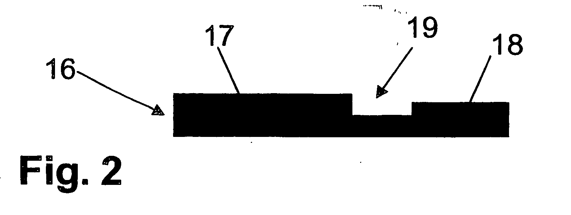

Auch bei der in Fig. 2 dargestellten BPP 16 ist der Mittelbereich 17 gegen den Randbereich 18 abgesetzt. Dazu ist hier im Randbereich 18 eine umlaufende Nut 19 ausgebildet. Diese Nut dient zur Aufnahme des imprägnierten und dadurch inkompressiblen Randbereichs einer MEA beim Verpressen des BPPS/MEA-Aufbaus.

An dieser Stelle sei angemerkt, dass im Rahmen der hier in Rede stehenden Erfindung auch BPPs liegen, die mit einer integrierten Randdichtung ausgestattet sind, sofern der Mittelbereich einer solchen BPP-Anordnung gegen deren Randbereich abgesetzt ist.

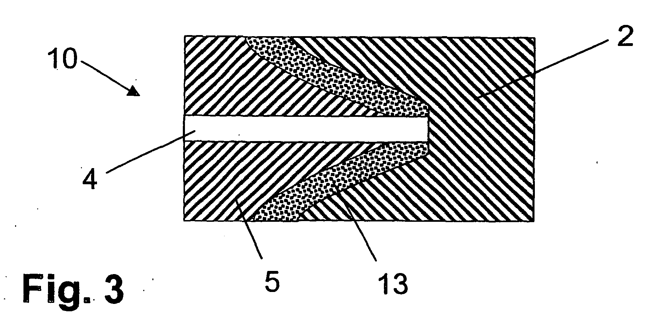

Die in den Figuren 3, 4 und 5 dargestellten MEAs 10, 11 und 12 umfassen ebenfalls eine Polymerelektrolytmembran (PEM) 4, deren Oberflächen einerseits mit einer Schicht aus Kathodenkatalysatormaterial und andererseits mit einer Schicht aus Anodenkatalysatormaterial versehen sind, wobei diese Katalysatorschichten auch hier nicht im Detail dargestellt sind. Die PEM 4 ist zwischen zwei Gas-Diffusions-Lagen (GDL) 5 angeordnet, die ebenfalls aus einem porösen Substrat gebildet sind. Zwar schließen die GDLs 5 in allen drei dargestellten Fällen bündig mit der PEM 4 ab. Im Unterschied zu dem in Fig. 1 dargestellten Ausführungsbeispiel sind die Ränder der GDLs 5 jedoch jeweils abgeflacht. Die MEAs 10, 11 und 12 sind jeweils mit einer integrierten Dichtung 2 ausgestattet, die aus einem elastischen Dichtungsmaterial besteht.

In dem in Fig. 3 dargestellten Ausführungsbeispiel umgreift die Dichtung 2 den Randbereich der MEA 10. Das Dichtungsmaterial ist hier bei der Herstellung der Dichtung 2, bei der auch der Randbereich der MEA 10 imprägniert worden ist, in die abgeflachten Bereiche der GDLs 5 eingedrungen. Obwohl der dabei entstandene Verbund im wesentlichen inkompressibel ist, lässt sich der Randbereich der MEA 10 hier auch senkrecht zur Membranebene komprimieren, da sich die bis in diesen Bereich erstreckende Dichtung 2 und das nicht imprägnierte GDL-Material komprimieren lassen.

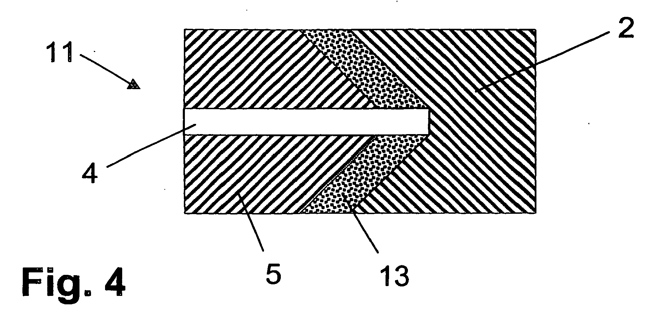

Bei der in Fig. 4 dargestellten Variante einer erfindungsgemäßen MEA 11 sind die Ränder der GDLs 5 bzgl. der Membranebene in einem Winkel von ca. 45° abgeschrägt. Auch diese MEA 11 ist mit einer integrierten Dichtung 2 ausgestattet, die aus einem elastischen Dichtungsmaterial besteht. Wie bei dem in Fig. 3 dargestellten Ausführungsbeispiel ist das Dichtungsmaterial bis zu einer bestimmten Tiefe in das MEA-Material und insbesondere in das poröse Substrat der GDLs 5 eingedrungen. Da die Ränder der GDLs 5 bzgl. der Membranebene abgeschrägt sind und die Imprägnierung 13 nur in einem Bereich ausgebildet ist, der sich parallel zu diesen abgeschrägten Rändern erstreckt, lässt sich auch hier der Randbereich der MEA 11 senkrecht zur Membranebene komprimieren, obwohl der durch das Imprägnieren entstandene Verbund im wesentlichen inkompressibel ist.

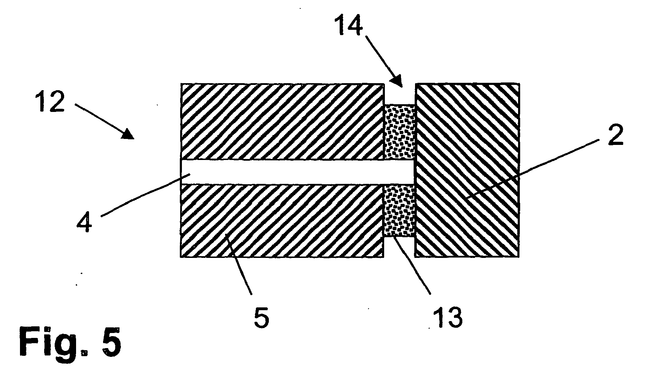

Im Unterschied zu den in den Figuren 3 und 4 dargestellten Ausführungsbeispielen zeigt Fig. 5 eine erfindungsgemäße MEA 12 mit einer integrierten Dichtung 2, die den imprägnierten Randbereich nicht umgreift, da in diesem Bereich eine Nut 14 ausgebildet ist. Ausgehend von einer MEA, wie sie in Fig. 1 dargestellt ist, wurde diese Nut 14 erst nachträglich - nach dem Imprägnieren und Anformen der Dichtung 2 - erzeugt, so dass der imprägnierte Randbereich der GDLs 5 im Ergebnis dünner ausgebildet ist als deren nicht imprägnierter Mittelbereich. An dieser Stelle sei angemerkt, dass sich eine solche Nut 14 nicht zwangsläufig über die gesamte Breite des imprägnierten Randbereichs erstrecken muss.

Die in den Figuren 3, 4 und 5 dargestellten MEAs 10, 11 und 12 können jeweils in Verbindung mit planparallelen Bipolarplatten verwendet werden, da hier schon allein durch einfaches Verpressen des BPP/MEA/BPP-Aufbaus ein guter Flächenkontakt zwischen der PEM 4 und den GDLs 5 sowie zwischen den GDLs 5 und den BPPs hergestellt werden kann. Außerdem wird so eine Verdrängung von Teilen der GDL in die Fließkanäle der BPPs vermieden. Zur Verbesserung des Flächenkontakts können diese MEAs 10, 11 und 12 aber auch in Verbindung mit Bipolarplatten verwendet werden, wie sie in den Figuren 1 und 2 dargestellt und in Verbindung mit diesen Figuren erläutert sind.

## Patentansprüche

1. Brennstoffzelle mit einer Membran-Elektroden-Anordnung (1), die zwischen zwei Bipolarplatten (6) angeordnet ist, wobei
- die MEA (1) eine Membran (4) umfasst, die zwischen mindestens zwei Gasdiffusionslagen (5) angeordnet ist,
- der Randbereich (3) der Membran-Elektroden-Anordnung (1) mit einem Dichtungsmaterial imprägniert ist und
- der aus den Bipolarplatten (6) und der Membran-Elektroden-Anordnung (1) bestehende Aufbau verpresst ist,
**dadurch gekennzeichnet, dass** der Mittelbereich (7) mindestens einer Bipolarplatte (6) gegen deren Randbereich (8) abgesetzt ist, so dass der Mittelbereich der MEA Membran-Elektroden-Anordnung (1) stärker komprimiert wird als der imprägnierte Randbereich (3) der Membran-Elektroden-Anordnung (1).

2. Brennstoffzelle nach Anspruch 1, **dadurch gekennzeichnet, dass** der Mittelbereich (7) der Bipolarplatte (6) eine größere Dicke aufweist als deren Randbereich (8).

3. Brennstoffzelle nach einem der Ansprüche 1 oder 2, **dadurch gekennzeichnet, dass** im Randbereich (18) der Bipolarplatte (16) eine umlaufende Nut (19) zur Aufnahme des imprägnierten Randbereichs der Membran-Elektroden-Anordnung ausgebildet ist.

4. Brennstoffzelle nach einem der Ansprüche 1 bis 3, **dadurch gekennzeichnet, dass** der imprägnierte Randbereich (3) der Membran-Elektroden-Anordnung (1) als Stopper fungiert, der ein Überpressen des aus den Bipolarplatten (6) und der Membran-Elektroden-Anordnung (1) bestehenden Aufbaus verhindert.

5. Brennstoffzelle nach einem der Ansprüche 1 bis 4, **dadurch gekennzeichnet, dass** die Membran-Elektroden-Anordnung (1; 10) mit einer integrierten Dichtung (2) versehen ist, die über den imprägnierten Randbereich (3) angebunden ist.

6. Brennstoffzelle nach Anspruch 1, **dadurch gekennzeichnet, dass** im Randbereich der Gasdiffusionslagen (5) ein Absatz ausgebildet ist.

7. Brennstoffzelle nach Anspruch 1, **dadurch gekennzeichnet, dass** der Rand der Gasdiffusionslagen (5) bezüglich der Membranebene abgeflacht und abgeschrägt ist, so dass der Randbereich der Membran-Elektroden-Anordnung (10) senkrecht zur Membranebene komprimierbar ist.

8. Brennstoffzelle nach Anspruch 5 oder 6, **dadurch gekennzeichnet, dass** über die Imprägnierung (13) eine Dichtung (2) angebunden ist.

9. Brennstoffzelle nach Anspruch 8, **dadurch gekennzeichnet, dass** die Dichtung (2) den imprägnierten Randbereich zumindest teilweise umgreift.

## Claims

1. Fuel cell having a membrane electrode arrangement (1) which is arranged between two bipolar plates (6), with
- the MEA (1) having a membrane (4) which is arranged between at least two gas diffusion layers (5),
- the edge area (3) of the membrane electrode arrangement (1) is impregnated with a sealing material, and
- the structure comprising the bipolar plates (6) and the membrane electrode arrangement (1) is compressed,
**characterized in that** the central area (7) of at least one bipolar plate (6) is stepped with respect to its edge area (8) such that the central area of the MEA membrane electrode arrangement (1) is more highly compressed than the impregnated edge area (3) of the membrane electrode arrangement (1).

2. Fuel cell according to Claim 1, **characterized in that** the central area (7) of the bipolar plate (6) has a greater thickness than its edge area (8).

3. Fuel cell according to one of Claims 1 or 2, **characterized in that** a circumferential groove (19) is formed in the edge area (18) of the bipolar plate (16) in order to accommodate the impregnated edge area of the membrane electrode arrangement.

4. Fuel cell according to one of Claims 1 to 3, **characterized in that** the impregnated edge area (3) of the membrane electrode arrangement (1) acts as a stopper which prevents overpressing of the structure comprising the bipolar plates (6) and the membrane electrode arrangement (1).

5. Fuel cell according to one of Claims 1 to 4, **characterized in that** the membrane electrode arrangement (1; 10) is provided with an integrated seal (2) which is linked via the impregnated edge area (3).

6. Fuel cell according to Claim 1, **characterized in that** a step is formed in the edge area of the gas diffusion layers (5).

7. Fuel cell according to Claim 1, **characterized in that** the edge of the gas diffusion layers (5) is flattened and inclined with respect to the membrane plane such that the edge area of the membrane electrode arrangement (10) can be compressed at right angles to the membrane plane.

8. Fuel cell according to Claim 5 or 6, **characterized in that** a seal (2) is linked via the impregnation (13).

9. Fuel cell according to Claim 8, **characterized in that** the seal (2) clasps the impregnated edge area, at least in places.

## Revendications

1. Cellule à combustible qui présente un système (1) d'électrode à membrane disposé entre deux plaques bipolaires (6) et dans laquelle :
- le MEA (1) comprend une membrane (4) disposée entre au moins deux couches (5) de diffusion de gaz,
- la bordure (3) du système d'électrode à membrane (1) est imprégnée d'un matériau d'étanchéité et
- la structure constituée des plaques bipolaires (6) et du système (1) d'électrode à membrane est comprimée,
**caractérisée en ce que**
la partie centrale (7) d'au moins une plaque bipolaire (6) est décalée par rapport à sa bordure (8) de telle sorte que la partie centrale du système (1) d'électrode à membrane MEA soit plus comprimée que la bordure imprégnée (3) du système (1) d'électrode à membrane.

2. Cellule à combustible selon la revendication 1, **caractérisée en ce que** la partie centrale (7) de la plaque bipolaire (6) a une plus grande épaisseur que sa bordure (8).

3. Cellule à combustible selon l'une des revendications 1 ou 2, **caractérisée en ce qu'**une rainure périphérique (19) de reprise de la bordure imprégnée du système d'électrode à membrane est formée dans la bordure (18) de la plaque bipolaire (16).

4. Cellule à combustible selon l'une des revendications 1 à 3, **caractérisée en ce que** la bordure imprégnée (3) du système (1) d'électrode à membrane joue le rôle d'un arrêt qui empêche que la structure constituée des plaques bipolaires (6) et du système (1) d'électrode à membrane soit comprimée à l'excès.

5. Cellule à combustible selon l'une des revendications 1 à 4, **caractérisée en ce que** le système (1; 10) d'électrode à membrane est doté d'un joint d'étanchéité (2) intégré qui est relié par l'intermédiaire de la bordure imprégnée (3).

6. Cellule à combustible selon la revendication 1, **caractérisée en ce qu'**un retrait est formé dans la bordure des couches (5) de diffusion de gaz.

7. Cellule à combustible selon la revendication 1, **caractérisée en ce que** le bord des couches (5) de diffusion de gaz est aplati et incliné par rapport au plan de la membrane de telle sorte que la bordure du système (10) d'électrode à membrane puisse être comprimée perpendiculairement au plan de la membrane.

8. Cellule à combustible selon les revendications 5 ou 6, **caractérisée en ce qu'**un joint d'étanchéité (2) est relié par l'intermédiaire de l'imprégnation (13).

9. Cellule à combustible selon la revendication 8, **caractérisée en ce que** le joint d'étanchéité (2) chevauche au moins en partie la bordure imprégnée.
